# EUROPEAN PATENT SPECIFICATION

(11) **EP 2 862 746 B1**
(45) Date of publication and mention of the grant of the patent: **02.05.2018**
(21) Application number: 14189152.3
(22) Date of filing: 16.10.2014
(51) Int. Cl.: B60N 2/58, B60N 2/64, B60N 2/70, B60N 2/72, B60N 2/44, B60N 2/02

(54) **VEHICLE SEAT**
FAHRZEUGSITZ
SIÈGE DE VÉHICULE

(30) Priority: 18.10.2013 JP 2013217503
(43) Date of publication of application: 22.04.2015
(73) Proprietor: TOYOTA BOSHOKU KABUSHIKI KAISHA, Kariya-shi, Aichi-ken 448-8651 (JP); TOYOTA JIDOSHA KABUSHIKI KAISHA, Toyota-shi, Aichi-ken 471-8571 (JP)
(72) Inventor: Nagayasu, Hidetaka, Kariya-shi, Aichi 448-8651 (JP); Katoh, Kohshi, Toyota-shi, Aichi 471-8571 (JP); Takeuchi, Eishi, Toyota-shi, Aichi 471-8571 (JP)
(74) Representative: Winter, Brandl, Fürniss, Hübner, Röss, Kaiser, Polte - Partnerschaft mbB

(56) References cited:
- WO-A1-2007/016625
- WO-A1-2013/021497
- WO-A1-2013/088826
- JP-A- 2005 349 956
- JP-A- 2014 151 766
- JP-A- 2014 169 067
- US-A1- 2014 225 407

## Description

### BACKGROUND OF THE INVENTION

### 1. Field of the Invention

The invention relates to a conveyance seat including a seat frame serving as a frame that supports a load of a seated occupant, and a seat pad that is disposed on the seat frame, and flexibly receives the load of the seated occupant.

### 2. Description of Related Art

When an occupant is seated in the same posture on a conveyance seat for a long time, the degree of tiredness of the occupant increases. Thus, JP 4095583 B describes a seat that allows a seated occupant to easily change his or her seated posture. In the seat, a seat cushion is able to be swung in a right-left direction with respect to a base member on a vehicle floor. As a result, the occupant can easily swing his or her body in the right-left direction while remaining in the seated posture. Thus, it is possible to promote blood circulation in the body to suppress an increase in the degree of tiredness.

However, in the seat described in JP 4095583 B, the entire seat cushion is able to be swung in the right-left direction with respect to the base member, and therefore, the seated posture of the occupant is unstable, and thus, the seat is not comfortable.

WO 2013/021497 A1 discloses a conveyance seat in accordance with the preamble of claim 1.

### SUMMARY OF THE INVENTION

Starting from WO 2013/021497 A1 the invention has the object to provide an alternative construction of a conveyance seat that holds the body of an occupant and allows the occupant to partially move his or her body easily so that the seated posture of the occupant is stably maintained and blood circulation in the body is promoted to suppress an increase in the degree of tiredness.

An aspect of the invention relates to a conveyance seat including: a seat frame serving as a frame that supports a load of a seated occupant; and a seat pad that is disposed on the seat frame, and flexibly receives the load of the seated occupant. The conveyance seat includes a support body disposed based on a center portion of a distribution of a sitting pressure applied by the seated occupant to the seat pad. In the conveyance seat, the support body is supported with respect to the seat frame such that a front end portion of the support body is rotatable in a right-left direction about a straight line tilted upward in a direction from a front side toward a rear side, and a rear end portion of the support body being supported with respect to the seat frame at two points, is movable in the right-left direction; and the seat pad includes a fixed portion that is supported at a fixed position by the seat frame, and a movable portion that is supported by the support body such that the movable portion is movable. According to the above-described aspect, the fixed portion of the seat pad is supported at the fixed position by the seat frame, and therefore, the seated posture of the occupant can be stably maintained by the fixed portion of the seat pad. Further, the movable portion of the seat pad is supported by the support body such that the movable portion is movable, and therefore, the occupant can easily swing his or her body while remaining in the seated posture. Thus, the pelvis is turned about a portion near the lumbar spine, and a sitting pressure is changed. Accordingly, blood circulation in the body is promoted to suppress an increase in the degree of tiredness.

In the above-described aspect, the support body may include a spring body that is stretched and contracted along a support plane of the support body. In this configuration, since the support body includes the spring body, the support body can be used also as a spring body required in the seat frame. Further, since the support body includes the spring body, when a phase deviation occurs between the rotation angle of the front end portion of the support body and the moved position of the rear end portion of the support body, or when the front end portion is rotated and the rear end portion is linearly moved, the spring body can absorb the deviation.

In the above-described aspect, a cut portion that allows the movable portion to move in accordance with movement of the support body may be provided at a border portion between the fixed portion and the movable portion of the seat pad. In this configuration, when the movable portion of the seat pad moves relative to the fixed portion of the seat pad, the fixed portion and the movable portion are not likely to influence each other. Therefore, the fixed portion can be stabilized at the fixed position more easily, and the movable portion can be moved together with the support body more easily. Accordingly, it is possible to enhance the effect of suppressing an increase in the degree of tiredness by promoting the blood circulation in the body while stably maintaining the seated posture of the occupant.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an exploded perspective view illustrating a first embodiment (reference);
FIG. 2 is a partially enlarged perspective view illustrating the first embodiment;
FIG. 3 is a partially enlarged exploded perspective view illustrating the first embodiment;
FIG. 4 is a vertical sectional view in a width direction illustrating the first embodiment;
FIG 5 is a vertical sectional view in a front-rear direction illustrating the first embodiment;
FIG. 6 is an explanatory view illustrating effects obtained in the first embodiment;
FIG. 7 is a vertical sectional view in the front-rear direction illustrating a second embodiment (reference);
FIG. 8 is a perspective view illustrating a support body in the second embodiment;
FIG. 9 is a front view illustrating a fixed bracket in the second embodiment; and
FIG. 10 is a partially enlarged perspective view illustrating a third embodiment of the invention.

### DETAILED DESCRIPTION OF EMBODIMENTS

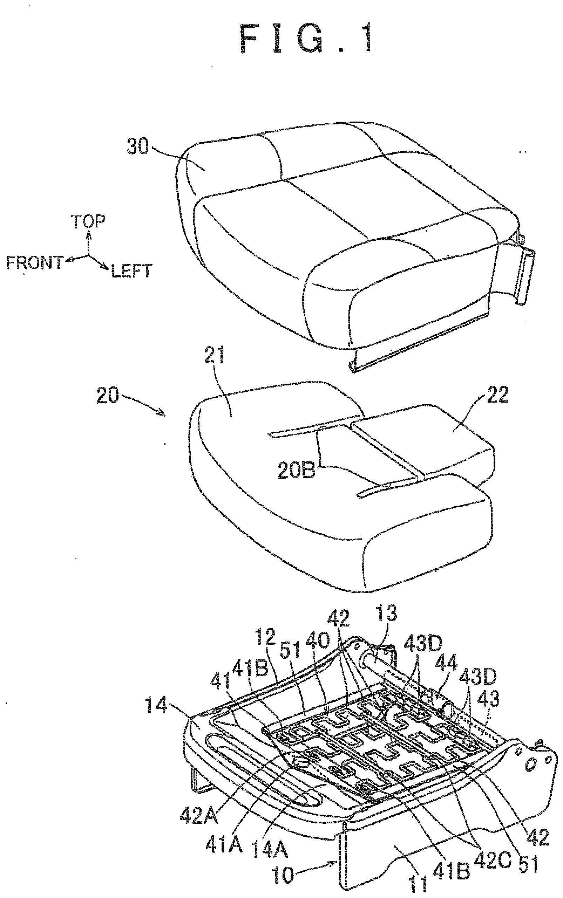

A first embodiment (reference) will be described with reference to FIG. 1 to FIG 6. In the first embodiment, the invention is applied to a seat cushion of a front seat of a vehicle. In each drawing, arrows indicate directions when the seat is provided in the vehicle. The seat cushion is formed by disposing a cushion pad 20 (that may be regarded as a seat pad according to the invention) that flexibly receives a load of a seated occupant, on a cushion frame 10 (that may be regarded as a seat frame according to the invention) serving as a frame that supports the load of the seated occupant, and covering the cushion frame 10 and the cushion pad 20 with a cushion cover 30, as in a known vehicle seat in related art. The basic structure of the seat cushion is the same as that of a known seat cushion in related art, and thus, detailed illustration and description of the basic structure of the seat cushion will be omitted. The cushion frame 10 is formed by connecting a cushion panel 14 and a rear pipe 13 to right and left side frames 12, 11 by welding. The cushion panel 14 is welded to front ends of the right and left side frames 12, 11. The cushion panel 14, and upper end surfaces of the side frames 11, 12 form a surface that supports the cushion pad 20.

A tilted portion 14A is provided in a portion in a rear side of the cushion panel 14, the portion being located between the right and left side frames 12, 11. The tilted portion 14A is tilted downward in a rearward direction. A swinging piece 41 with a substantially triangle shape is fitted to a center portion of the tilted portion 14A in a right-left direction with use of a stepped hinge pin 41A such that the swinging piece 41 is able to be swung (rotated) in the right-left direction. Thus, the swinging piece 41 is swung (rotated) in the right-left direction about a rotation axis that is perpendicular to the tilted portion 14A. That is, the swinging piece 41 is supported such that the swinging piece 41 is able to be swung (rotated) in the right-left direction about the straight line tilted upward in a direction from the front side toward the rear side. In other words, the swinging piece 41 (i.e., a front end portion of a support body 40 to be described later) is tilted downward in the rearward direction. A portion of the swinging piece 41, which is located at a bottom side of the triangle shape, is bent to extend rearward in a horizontal direction. Portions of the plate surface of the bent portion are cut and raised to form four spring receivers 41B. In the swinging piece 41, the four spring receivers 41B are arranged in the right-left direction. Front ends of four S-shaped springs 42 (that may be regarded as a spring body according to the invention) engage with the respective spring receivers 41B.

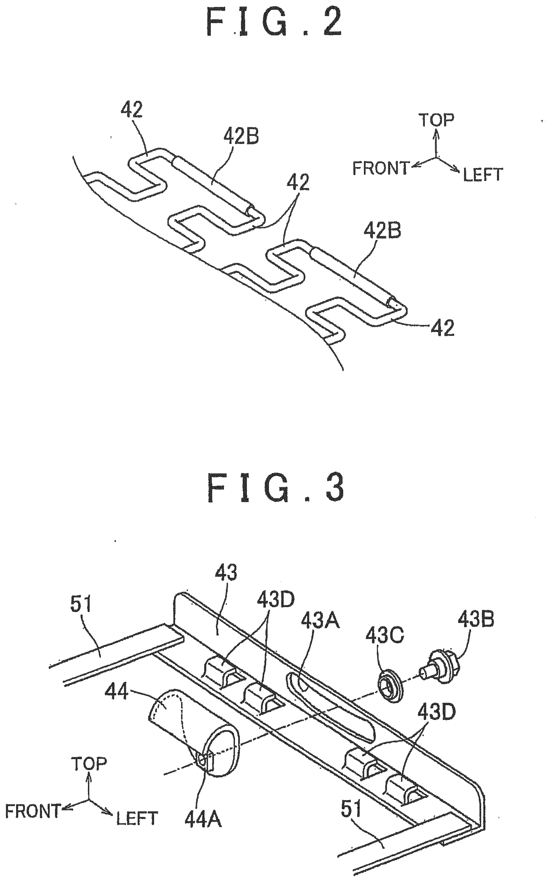

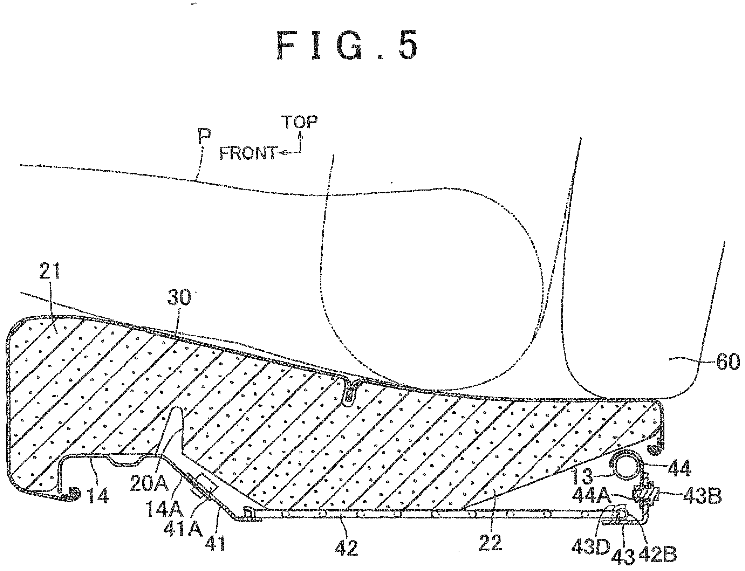

A fixed bracket 44 is fixed, by welding, to a center portion of the rear pipe 13 in the right-left direction. An extended portion of the fixed bracket 44, which is disposed behind the rear pipe 13, extends downward. A spring bracket 43 is fitted to the extended portion of the fixed bracket 44, as clearly shown in each of FIG. 3 and FIG 5. The spring bracket 43 is longer than the fixed bracket 44 in the right-left direction. The spring bracket 43 is a metal member that has an L-shaped cross-section. A sliding hole 43A is provided in an upper-side portion of the spring bracket 43 with the L-shaped cross-section. The sliding hole 43A has an arc shape. The sliding hole 43A is elongated in the right-left direction (i.e., extends in the right-left direction), and a center portion thereof is located at the lowest position. The spring bracket 43 is connected to the fixed bracket 44 with the use of a stepped bolt 43B that extends through the sliding hole 43A, such that the spring bracket 43 is slidable in the right-left direction. In this case, the stepped bolt 43B is fastened to a weld nut 44A such that a bush 43C is disposed between the stepped bolt 43B and an edge portion around the sliding hole 43A. The weld nut 44A is fixed to the fixed bracket 44 by welding. The bush 43C may be replaced by a bearing. Four spring receivers 43D are provided in a lower-side front portion of the spring bracket 43 with the L-shaped cross-section. The spring receivers 43D are similar to the spring receivers 41B of the swinging piece 41. The spring receivers 43D are oriented in a direction opposite to the direction in which the spring receivers 41B are oriented. The front ends of the four S-shaped springs 42 engage with the respective spring receivers 41B, as described above, and rear ends of the four S-shaped springs 42 engage with the respective spring receivers 43D. The swinging piece 41 is connected to right and left end portions of the spring bracket 43 by respective connection pieces 51, and the S-shaped springs 42 are disposed between the connection pieces 51.

The four S-shaped springs 42 consist of two pairs of the S-shaped springs that are arranged in the right-left direction. Rear end portions of the S-shaped springs 42 in each pair are bent toward each other. A buffer member 42B made of resin is provided on engagement portions in the rear end portions of the S-shaped springs 42 in each pair, the engagement portions engaging with the spring receivers 43D (refer to FIG. 2) so that the S-shaped springs 42 do not directly contact the respective spring receivers 43D. This suppresses occurrence of squeak noise when an occupant is seated. Further, an appropriate number of connection pieces 42C made of resin (two connection pieces 42C in FIG 1) are provided to extend in the right-left direction across the four S-shaped springs 42 arranged in the right-left direction so that the S-shaped springs 42 are integrated with each other. The buffer members 42B and the connection pieces 42C are formed integrally with the S-shaped springs 42 by resin insert molding. The four S-shaped springs 42, the swinging piece 41, the spring bracket 43, and the connection pieces 51 form the support body 40. The support body 40 is disposed based on a center portion of a distribution of a sitting pressure.

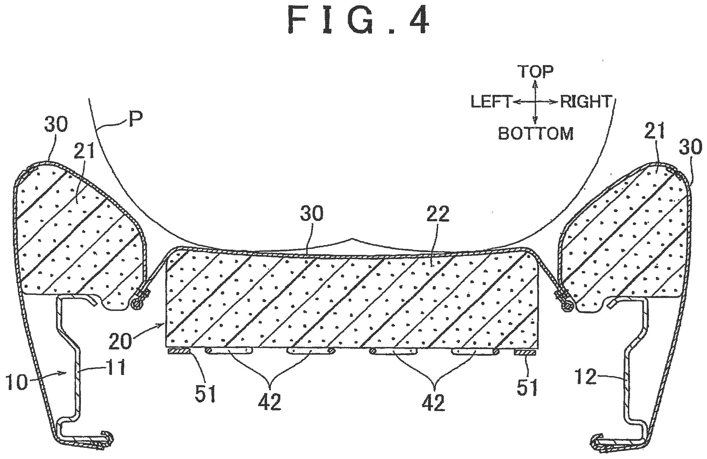

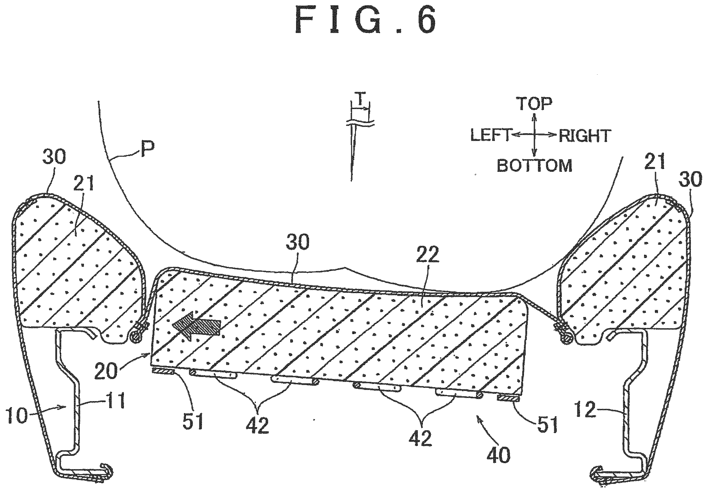

The cushion pad 20 is different from an ordinary cushion pad in that cut portions 20B extending in a direction from the rear side toward the front side are provided in right and left side portions in the cushion pad 20 (refer to FIG 1). In a lower surface of the cushion pad 20, a cut portion 20A extending in the right-left direction is provided between front end portions of the cut portions 20B (refer to FIG 5). As a result, the cushion pad 20 includes a fixed portion 21 that is disposed on the upper surfaces of the cushion panel 14 and the side frames 11, 12 of the cushion frame 10 and is supported at a fixed position, and a movable portion 22 that is disposed on the S-shaped springs 42 of the support body 40, and is supported so as to be movable. The fixed portion 21 and the movable portion 22 are formed as the cushion pad 20, that is, the fixed portion 21 and the movable portion 22 are formed as one unit. However, since the cushion pad 20 is partially divided by the cut portion 20A and the cut portions 20B, the fixed portion 21 is stably fixed on the upper surfaces of the cushion panel 14 and the side frames 11, 12, and the movable portion 22 is fixed on the support body 40 such that the movable portion 22 is able to be swung in the right-left direction. In each of FIG. 4 and FIG. 6, buttocks of the seated occupant are indicated by the reference sign P. In FIG. 5, a seat back is indicated by the reference numeral 60, and a lower limb of the seated occupant is indicated by the reference sign P.

When the seated occupant is seated on the vehicle seat with the above-described configuration, a femoral region of the occupant is supported on the fixed portion 21 of the cushion pad 20, and a most part of the buttocks of the occupant is supported on the movable portion 22 of the cushion pad 20. Therefore, the occupant is supported by the fixed portion 21, and the occupant can stably maintain the seated posture. Further, since the movable portion 22 is provided, the occupant can swing his or her body while remaining in the seated posture. Thus, the pelvis is turned about a portion near the lumbar spine, and the sitting pressure is changed. Accordingly, blood circulation in the body is promoted, and thus, an increase in the degree of tiredness is suppressed. More specifically, when the occupant seated on the seat cushion swings his or her upper body to the right and left, the S-shaped springs 42 of the support body 40 are swung in the right-left direction together with the swinging piece 41 and the movable portion 22 of the cushion pad 20. At this time, the spring bracket 43 provided integrally with the rear end portions of the S-shaped springs 42 are also moved in the right-left direction along the sliding hole 43A, together with the swinging piece 41 and the S-shaped springs 42. In this case, since the sliding hole 43A has the arc shape, the support body 40 can be swung without warping the S-shaped springs 42. Therefore, the support body 40 is smoothly swung. Further, the sliding hole 43A with the arc shape is formed such that a center portion of the sliding hole 43A at a center position in the width of the support body 40 in the right-left direction is located at the lowest position. Therefore, the support body 40, which has been swung, receives a force for returning the support body 40 to the position at which the support body 40 is located before being swung, due to gravity received by the stepped bolt 43B via the support body 40. Accordingly, when the occupant is seated without swinging his or her upper body to the right and left, the support body 40 is maintained at a neutral position at which the support body 40 is not swung.

FIG 6 illustrates a state in which the occupant P seated on the seat tilts his or her upper body to the right side as indicated by an arrow T. At this time, the movable portion 22 of the cushion pad 20 moves toward the upper left side together with the support body 40 as indicated by a shaded arrow. The left side of the buttocks of the occupant P moves upward so as to be away from the movable portion 22 (including the cushion cover 30). Thus, a contact pressure between the left side of the buttocks of the occupant P and the movable portion 22 decreases. When the occupant P seated on the seat tilts his or her upper body toward the left side opposite to the right side toward which the occupant P tilts his or her upper body in FIG. 6, the movable portion 22 moves toward the upper right side opposite to the side indicated by the shaded arrow, the right side of the buttocks of the occupant P moves upward so as to be away from the movable portion 22, and the contact pressure between the right side of the buttocks of the occupant P and the movable portion 22 decreases. Thus, when the occupant P seated on the seat swings his or her upper body in the above-described manner, and thus the contact pressure between the buttocks of the occupant P and the movable portion 22 is changed, a massaging effect on the buttocks of the occupant P is obtained, and blood circulation in the buttocks is promoted. Accordingly, it is possible to suppress an increase in the degree of tiredness of the body of the occupant P. Further, since the movable portion 22 moves to the right and left in accordance with the movement of the upper body of the occupant P as described above, the occupant P can easily move his or her upper body as if the occupant used an exercise machine. Thus, the blood circulation in the body is promoted due to an exercise effect, and an increase in the degree of tiredness is suppressed. The movable portion 22 and the fixed portion 21 are covered with the cushion cover 30, and thus, the movable portion 22 is connected to the fixed portion 21 with the use of the cushion cover 30. However, in this embodiment, when the movable portion 22 moves, the movable portion 22 can freely move without being pulled by the fixed portion 21 through the cushion cover 30, because the cushion cover 30 is more stretchable than an ordinary cushion cover.

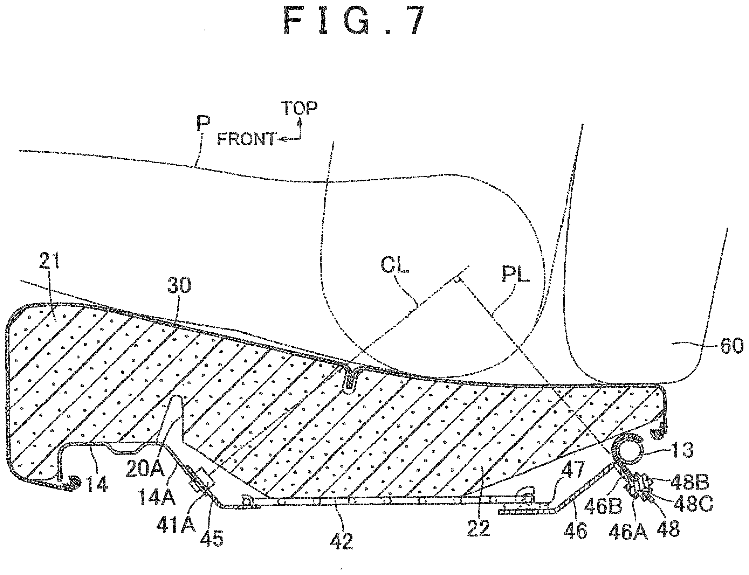

A second embodiment (reference) will be described with reference to FIG. 7 to FIG 9. The feature of the second embodiment is that the rear portion of the support body 40 is rotated, whereas the rear portion of the support body 40 is linearly moved in the first embodiment. The other portions of the configuration in the second embodiment are the same as those in the first embodiment. Therefore, the same portions are denoted by the same reference numerals or signs, and the repeated description thereof will be omitted. In each of FIG 7 to FIG. 9, arrows indicate the directions when the vehicle seat is provided in the vehicle.

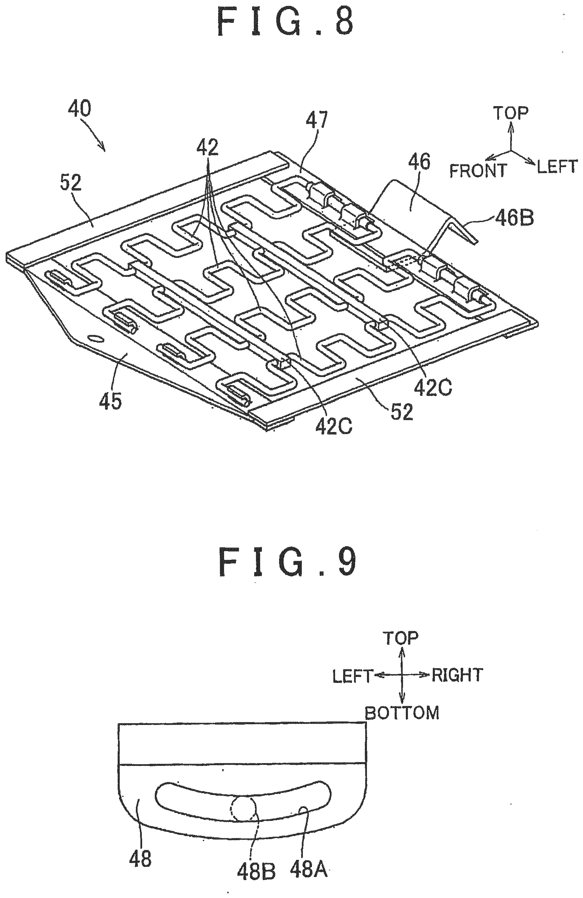

A fixed bracket 48 is fixed to the rear pipe 13 by welding. The fixed bracket 48 includes a portion extending along an upper portion to a front lower side of the rear pipe 13, and an extended portion that is extended and slightly tilted toward the rear side. As clearly shown in FIG 9, in the extended portion, a sliding hole 48A that is elongated in the right-left direction (extends in the right-left direction) is provided. The sliding hole 48A has an arc shape, and extends along a swinging trajectory of the support body 40. FIG. 7 shows a rotation center line CL for a swinging piece 45 that is similar to the swinging piece 41 in the first embodiment. FIG 7 also shows that the fixed bracket 48 is disposed along a plane PL that is orthogonal to the rotation center line CL. The rear ends of the S-shaped springs 42 engage with a second spring bracket 47 that corresponds to the spring bracket 43 in the first embodiment. A first spring bracket 46 is connected to the second spring bracket 47 by welding (refer to FIG. 7 and FIG. 8). The first spring bracket 46 includes a tilted portion 46B that is tilted downward in the rearward direction so as to be parallel to the tilt (inclination) of the swinging piece 45. In the first spring bracket 46, a weld nut 46A is fixed to the tilted portion 46B by welding. A stepped bolt 48B that extends through the sliding hole 48A of the fixed bracket 48 is fastened to the weld nut 46A. A bush 48C is disposed between the stepped bolt 48B and an edge portion around the sliding hole 48A to decrease friction resistance between the stepped bolt 48B and the edge portion around the sliding hole 48A. The swinging piece 45 is connected to right and left end portions of the second spring bracket 47 by respective connection pieces 52, and the S-shaped springs 42 are arranged between the connection pieces 52.

In the vehicle seat with the above-described configuration, when the occupant seated on the seat cushion swings his or her upper body to the right and left, the support body 40 is swung in the right-left direction, and the movable portion 22 of the cushion pad 20 is also swung, as in the first embodiment. At this time, the second spring bracket 47 is also guided by the sliding hole 48A of the fixed bracket 48 via the first spring bracket 46 and the stepped bolt 48B (in other words, the second spring bracket 47 is connected to the fixed bracket 48 via the first spring bracket 46 and the stepped bolt 48B). Therefore, the support body 40 is rotated about the rotation center of the stepped hinge pin 41A.

Accordingly, in the second embodiment, when the occupant seated on the seat swings his or her upper body to the right and left, the sides of the buttocks of the occupant alternately move upward to be away from the movable portion 22, and thus, the contact pressure between one side of the buttocks and the movable portion 22, and the contact pressure between the other side of the buttocks and the movable portion 22 alternately decrease, as in the first embodiment. As a result, the massaging effect on the buttocks of the occupant P is obtained, and the blood circulation in the buttocks is promoted. Accordingly, it is possible to suppress an increase in the degree of tiredness of the body of the occupant P. Further, the occupant P can easily move his or her upper body as if the occupant P used an exercise machine, and therefore, the blood circulation in the body is promoted due to the exercise effect, and an increase in the degree of tiredness is suppressed. At this time, the femoral region of the occupant is supported on the fixed portion 21 of the cushion pad 20, and the occupant P can stably maintain the seated posture.

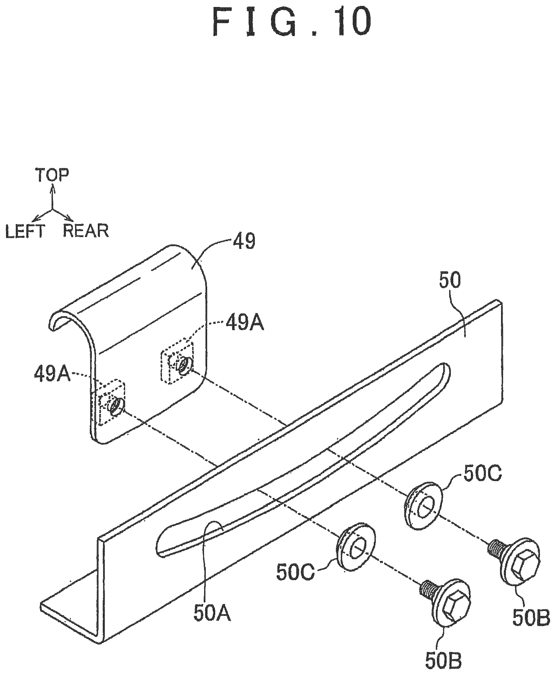

A third embodiment of the invention will be described with reference to FIG 10. The feature of the third embodiment is that the rear portion of the support body 40 is rotated, whereas the rear portion of the support body 40 is linearly moved in the first embodiment. The other portions of the configuration in the third embodiment are the same as those in the first embodiment. The same portions are denoted by the same reference numerals or signs, and the repeated description thereof will be omitted. In FIG. 10 as well, arrows indicate the directions when the vehicle seat is provided in the vehicle. A fixed bracket 49 (refer to FIG. 10) is fixed to the rear pipe 13 (refer to FIG 1) by welding, in the manner similar to the manner in which the fixed bracket 44 is fixed to the rear pipe 13 in the first embodiment. A spring bracket 50 (refer to FIG. 10) is connected to a rear end portion of the support body 40 (refer to FIG 1). A pair of weld nuts 49A is respectively fixed to right and left side portions in a portion of the fixed bracket 49, the portion being located behind the rear pipe 13, and extending downward. Further, a sliding hole 50A with an arc shape, which is similar to the sliding hole 48A (refer to FIG. 9) of the fixed bracket 48 in the second embodiment, is provided in an upper-side portion of the spring bracket 50 with an L-shaped cross-section. A pair of stepped bolts 50B extends through the sliding hole 50A, and the stepped bolts 50B are fastened to the weld nuts 49A, respectively. At this time, a bush 50C is disposed between each stepped bolt 50B and an edge portion around the sliding hole 50A of the spring bracket 50, to decrease the friction resistance between the stepped bolt 50B and the edge portion around the sliding hole 50A. Thus, when the support body 40 is rotated in the right-left direction, the spring bracket 50 is supported by the pair of stepped bolts 50B, and is swung in an arc along the sliding hole 50A. When the swing width of the support body 40 in the third embodiment is set to be equal to the swing width of the support body 40 in the second embodiment, the width of the sliding hole 50A in the right-left direction needs to be set to be larger than the width of the sliding hole 48A in the right-left direction. The difference between the widths of the sliding hole 50A and the sliding hole 48A is caused due to the fact that when the support body 40 is swung, the pair of stepped bolts 50B slides in the sliding hole 50A, whereas the one stepped bolt 48B slides in the sliding hole 48A. The width of the sliding hole 50A in the right-left direction is set to be larger than the width of the sliding hole 48A in the right-left direction by a length equivalent to a distance between the pair of stepped bolts 50B.

In the vehicle seat with the above-described configuration, as in the first embodiment, when the occupant seated on the seat cushion swings his or her upper body to the right and left, the front end portion of the support body 40 is rotated about the stepped hinge pin 41A serving as the rotation center, and the rear end portion of the support body 40 is swung (moved) along the arc shape of the sliding hole 50A. Accordingly, the movable portion 22 of the cushion pad 20 is also swung. Thus, as in the first and second embodiments, the massaging effect on the buttocks of the occupant P is obtained, and the blood circulation in the buttocks of the occupant P is promoted. Accordingly, it is possible to suppress an increase in the degree of tiredness of the body of the occupant P. Further, the occupant P can easily move his or her upper body as if the occupant P used an exercise machine, and therefore, the blood circulation of the body is promoted due to the exercise effect, and an increase in the degree of tiredness is suppressed. At this time, the femoral region of the occupant is supported on the fixed portion 21 of the cushion pad 20, and therefore, the occupant can stably maintain the seated posture. In the third embodiment, the spring bracket 50 connected to the rear end portion of the support body 40 is supported by the pair of stepped bolts 50B. Accordingly, the support body 40 is supported at three points including a support point at which the front end portion of the support body 40 is supported by the stepped hinge pin 41A. Thus, the occupant can be stably supported, as compared to the configuration in each of the first and second embodiments, in which the support body 40 is supported at two points. As a result, when the occupant is seated without swinging his or her upper body to the right and left, the upper body is stably supported without being swung to the right and left.

In the above-described embodiments, the fixed portion 21 and the movable portion 22 of the cushion pad 20 are formed as one unit. However, the fixed portion 21 and the movable portion 22 may be formed separately, that is, the fixed portion 21 and the movable portion 22 may be formed as separate bodies. In the above-described embodiments, the fixed portion 21 and the movable portion 22 are formed by respectively providing the cut portions, which extend from the rear side toward the front side, in the right and left side portions of the cushion pad 20, and surfaces defining the cut portions are vertical surfaces. However, the surfaces defining the cut portions may be tilted surfaces that are tilted upward in a direction toward the right side or in a direction toward the left side, and the movable portion 22 may be provided over the entire width of the cushion pad 20 in the right-left direction. In this case, the movable portion 22 and the fixed portion 21 are arranged in a top-bottom direction in each of the right and left side portions of the cushion pad 20. Therefore, when a sitting pressure is applied from an occupant, the fixed portion 21 and the movable portion 22 may directly contact each other. Thus, it is necessary to provide a sliding member between the fixed portion 21 and the movable portion 22 to prevent the direction contact between the fixed portion 21 and the movable portion 22, and to allow the movable portion 22 to move relative to the fixed portion 21. In the above-described embodiments, each of the sliding hole 43A of the spring bracket 43, the sliding hole 48A of the fixed bracket 48, and the sliding hole 50A of the spring bracket 50 has an arc shape. However, each of the sliding hole 43A, the sliding hole 48A, and the sliding hole 50A may have a straight line shape extending in the right-left direction. However, in this case, that is, in the case where the sliding hole 43A, 48A, or 50A has a straight line shape, the support body 40 needs to be deformed so as to be twisted in the right-left direction, because the support body 40 is rotated about the front end side thereof. In the above-described embodiments, the support body 40 includes the S-shaped springs 42. However, the support body 40 may be formed by a plate member, or a stretchable cloth. In the above-described embodiments, the invention is applied to the seat cushion. However, the invention may be applied to a seat back. In the above-described embodiments, the invention is applied to the vehicle seat. However, the invention may be applied to other conveyance seats, such as seats in an airplane, a ship, and a train.

## Claims

1. A conveyance seat including: a seat frame (10) serving as a frame that supports a load of a seated occupant; and a seat pad (20) that is disposed on the seat frame (10), and flexibly receives the load of the seated occupant, the conveyance seat **characterized by** comprising
a support body (40) disposed based on a center portion of a distribution of a sitting pressure applied by the seated occupant to the seat pad (20),
wherein:
the support body (40) is supported with respect to the seat frame (10) such that a front end portion of the support body (40) is rotatable in a right-left direction about a straight line tilted upward in a direction from a front side toward a rear side, **characterised in that**
a rear end portion of the support body (40) is supported with respect to the seat frame (10) at two points, and is movable in the right-left direction; and
the seat pad (20) includes a fixed portion (21) that is supported at a fixed position by the seat frame (10), and a movable portion (22) that is supported by the support body (40) such that the movable portion (22) is movable.

2. The conveyance seat according to claim 1, wherein the support body (40) includes a spring body (42) that is stretched and contracted along a support plane of the support body (40).

3. The conveyance seat according to claim 1 or 2, wherein a cut portion that allows the movable portion (22) to move in accordance with movement of the support body (40) is provided at a border portion between the fixed portion (21) and the movable portion (22) of the seat pad (20).

4. The conveyance seat according to any one of claims 1 to 3, wherein:
the support body (40) includes a spring bracket, and a fixed bracket is fixed to the seat frame (10); and
a sliding hole is provided in one of the spring bracket and the fixed bracket, and the spring bracket is connected to the fixed bracket such that the spring bracket is movable in the right-left direction, with use of at least one bolt extending through the sliding hole.

5. The conveyance seat according to claim 4, wherein the sliding hole has an arc shape, and extends in the right-left direction.

## Patentansprüche

1. Fahrzeugsitz, umfassend: einen Sitzrahmen (10), der als ein Rahmen dient, der eine Last eines sitzenden Insassen trägt; und ein Sitzpolster (20), das auf dem Sitzrahmen (10) angeordnet ist und die Last des sitzenden Insassen flexibel aufnimmt, wobei der Fahrzeugsitz **dadurch gekennzeichnet ist, dass** er Folgendes umfasst:
einen Stützkörper (40), der basierend auf einem Mittelabschnitt einer Verteilung eines Sitzdrucks angeordnet ist, der von dem sitzenden Insassen auf das Sitzpolster (20) ausgeübt wird,
wobei:
der Stützkörper (40) in Bezug auf den Sitzrahmen (10) derart gelagert ist, dass ein vorderer Endabschnitt des Stützkörpers (40) in einer Rechts-Links-Richtung um eine gerade Linie drehbar ist, die in einer Richtung von einer Vorderseite zu einer Rückseite nach oben geneigt ist, **dadurch gekennzeichnet, dass**
ein hinterer Endabschnitt des Stützkörpers (40) in Bezug auf den Sitzrahmen (10) an zwei Punkten abgestützt ist und in der Rechts-Links-Richtung beweglich ist; und
das Sitzpolster (20) einen festen Abschnitt (21) aufweist, der an einer festen Position durch den Sitzrahmen (10) abgestützt ist, und
einen beweglichen Abschnitt (22), der von dem Stützkörper (40) so getragen ist, dass der bewegliche Abschnitt (22) beweglich ist.

2. Fahrzeugsitz nach Anspruch 1, wobei der Stützkörper (40) einen Federkörper (42) umfasst, der entlang einer Stützebene des Stützkörpers (40) verlängerbar und zusammenziehbar ist.

3. Fahrzeugsitz nach Anspruch 1 oder 2, wobei ein Schnittabschnitt, der es dem beweglichen Abschnitt (22) ermöglicht, sich entsprechend der Bewegung des Stützkörpers (40) zu bewegen, an einem Randabschnitt zwischen dem festen Abschnitt (21) und dem beweglichen Abschnitt (22) des Sitzpolsters (20) vorgesehen ist.

4. Fahrzeugsitz nach einem der Ansprüche 1 bis 3, wobei:
der Stützkörper (40) einen Federbügel aufweist, und ein fester Bügel am Sitzrahmen (10) befestigt ist; und
ein Gleitloch in entweder dem Federbügel oder dem festen Bügel vorgesehen ist, und der Federbügel mit dem festen Bügel so verbunden ist, dass der Federbügel nach rechts und links beweglich ist, wobei mindestens ein Bolzen verwendet wird, der sich durch das Gleitloch erstreckt.

5. Fahrzeugsitz nach Anspruch 4, wobei das Gleitloch eine Bogenform besitzt und sich nach rechts und links erstreckt.

## Revendications

1. Siège de transport incluant : une armature de siège (10) servant d'armature qui supporte une charge d'un occupant assis ; et un coussin de siège (20) qui est disposé sur l'armature de siège (10), et reçoit avec flexibilité la charge de l'occupant assis, le siège de transport étant **caractérisé en ce qu'**il comprend
un corps de support (40) disposé sur une portion centrale d'une répartition d'une pression d'assise appliquée par l'occupant assis au coussin de siège (20),
dans lequel :
le corps de support (40) est supporté par rapport à l'armature de siège (10) pour qu'une portion d'extrémité avant du corps de support (40) puisse tourner dans un sens droite-gauche autour d'une droite inclinée vers le haut dans une direction allant d'un côté avant vers un côté arrière, **caractérisé en ce que**
une portion d'extrémité arrière du corps de support (40) est supportée par rapport à l'armature de siège (10) en deux points, et peut se déplacer dans le sens droite-gauche ; et
le coussin de siège (20) inclut une portion fixe (21) qui est supportée en une position fixe par l'armature de siège (10), et une portion mobile (22) qui est supportée par le corps de support (40) de telle sorte que la portion mobile (22) puisse se déplacer.

2. Siège de transport selon la revendication 1, dans lequel le corps de support (40) inclut un corps de ressort (42) qui est étiré et contracté le long d'un plan de support du corps de support (40).

3. Siège de transport selon la revendication 1 ou 2, dans lequel une portion coupée qui permet à la portion mobile (22) de se déplacer en se conformant au mouvement du corps de support (40) est ménagée au niveau d'une portion de bordure entre la portion fixe (21) et la portion mobile (22) du coussin de siège (20).

4. Siège de transport selon l'une quelconque des revendications 1 à 3, dans lequel :
le corps de support (40) inclut une console de ressort, et une console fixe est fixée à l'armature de siège (10) ; et
un trou de glissement est ménagé dans l'une de la console de ressort et de la console fixe, et la console de ressort est raccordée à la console fixe pour que la console de ressort puisse se déplacer dans le sens droite-gauche, par l'utilisation d'au moins un boulon s'étendant à travers le trou de glissement.

5. Siège de transport selon la revendication 4, dans lequel le trou de glissement a une forme d'arc, et s'étend dans le sens droite-gauche.
